# EUROPÄISCHE PATENTANMELDUNG

(11) **EP 2 573 357 A1**
(43) Veröffentlichungstag der Anmeldung: **27.03.2013**
(21) Anmeldenummer: 12183139.0
(22) Anmeldetag: 05.09.2012
(51) Int. Cl.: F02B 37/18, F01D 17/10

(54) **Klappenvorrichtung für ein Turbolder-Wastegateventil**

(30) Priorität: 26.09.2011 DE 102011083369
(71) Anmelder: Bayerische Motoren Werke Aktiengesellschaft, 80809 München (DE)
(72) Erfinder: Helm, Thomas, 86929 Penzing (DE); Fröschl, Wolfgang, 81827 München (DE); Stoeckl, Stefan, 85395 Attenkirchen (DE); Brummer, Manfred, 86510 Ried (DE)

(57) **Zusammenfassung**

Eine Klappenvorrichtung (10) für ein Turbolader-Wastegateventil umfasst einen Hebel (12), der zur Verbindung mit einer mechanischen Steuereinrichtung vorgesehen ist, und einen Ventilkörper (18) mit einem Klappenabschnitt (20), der zum Abdecken einer Bypassöffnung vorgesehen ist. Wenigstens der Hebel (12) und der Ventilkörper (18) der Klappenvorrichtung (10) sind einteilig ausgebildet.

## Beschreibung

Die Erfindung betrifft eine Klappenvorrichtung für ein Turbolader-Wastegateventil.

Um die Aufladung eines Kolbenmotors durch einen Abgasturbolader zu begrenzen, wird eine Ladedruckregelung benötigt. Diese Regelung kann mithilfe eines Wastegateventils (auch Bypassventil oder Druckentlastungsventil genannt) im Abgasstrom erreicht werden. Das Wastegateventil wird durch eine Klappe gesteuert, die an einen Geber auf der Verdichterseite des Turboladers gekoppelt ist. Bei geschlossener Klappe strömt das gesamte Abgas durch die Turbine des Turboladers und treibt damit die Turbinenwelle mit voller Last an. Bei Überschreiten eines vorbestimmten Ladedrucks wird das Wastegateventil geöffnet, wodurch ein großer Anteil des Abgases an der Turbine des Turboladers vorbei direkt in den Auspuff geleitet wird, was ein weiteres Ansteigen der Turbinendrehzahl unterbindet.

Die Klappen bekannter Wastegateventile bestehen aus mehreren relativ zueinander beweglichen Bauteilen. Bei einer gängigen Bauart weist ein über ein Gestänge mit dem Geber verbundener Hebel eine Bohrung auf, in welcher ein Ventilkörper beweglich gelagert ist. Dadurch wird beim Schließen der Klappe ein Toleranzausgleich erreicht, da sich die Klappe selbsttätig ausrichten kann und ein Verklemmen oder ein schräger Sitz der Klappe auf der gegenüberliegenden Bypassöffnung des Turbinengehäuses (Abgaseinströmöffnung) vermieden wird. Die relative Beweglichkeit der Klappenbauteile ist nach herrschender Lehrmeinung für die angestrebte Abdichtung zwischen der Dichtfläche der Klappe und der Bypassöffnung zwingend erforderlich.

Die Beweglichkeit der Klappenbauteile bringt jedoch einige Nachteile mit sich. Neben einer unerwünschten Geräuschentwicklung ist vor allem eine hohe Verschleißanfälligkeit aufgrund der hohen mechanischen Beanspruchung und der Reibentwicklung zwischen den Bauteilen zu beklagen.

Aufgabe der Erfindung ist es, eine robuste Klappenvorrichtung für ein Wastegateventil eines Turboladers zu schaffen.

Gelöst wird diese Aufgabe durch eine Klappenvorrichtung mit den Merkmalen des Anspruchs 1. Vorteilhafte und zweckmäßige Ausgestaltungen der erfindungsgemäßen Klappenvorrichtung sind in den Unteransprüchen angegeben.

Die erfindungsgemäße Klappenvorrichtung für ein Turbolader-Wastegateventil umfasst einen Hebel, der zur Verbindung mit einer mechanischen Steuereinrichtung vorgesehen ist, und einen Ventilkörper mit einem Klappenabschnitt, der zum Abdecken einer Bypassöffnung vorgesehen ist. Gemäß der Erfindung sind wenigstens der Hebel und der Ventilkörper einteilig ausgebildet. Das bedeutet, dass der Hebel und der Ventilkörper (und gegebenenfalls auch noch weitere Teile) der Klappenvorrichtung nicht nachträglich zusammengebaut, sondern aus einem Werkstück hergestellt sind.

Die Erfindung beruht auf der überraschenden Erkenntnis, dass mit einer einteiligen Klappenvorrichtung entgegen der herrschenden Lehrmeinung durchaus eine ausreichende Abdichtung erreicht werden kann. Es hat sich nämlich gezeigt, dass bei bekannten Klappenvorrichtungen die relativ zueinander beweglichen Bauteile unter Umständen zu Schwingungen neigen (Flattern), was sich nicht nur negativ auf den Verschleiß, sondern offensichtlich auch negativ auf die Dichtheit auswirkt. Obwohl sie sich nicht selbsttätig ausrichten kann, ist gerade in solchen Fällen eine einteilig ausgeführte Klappenvorrichtung überlegen, da sie als massives Einzelteil nicht so leicht zu Schwingungen angeregt werden kann. In der Beurteilung der Gesamtperformance der Klappenvorrichtung überwiegt dieser Faktor im Vergleich zum fehlenden Toleranzausgleich.

Da bei der erfindungsgemäßen Klappenvorrichtung keine Reibung zwischen einzelnen Bauteilen auftritt, vermindert sich die Verschleißanfälligkeit erheblich, wodurch die Lebensdauer der Klappenvorrichtung deutlich gesteigert werden kann. Außerdem sind Klappergeräusche ausgeschlossen. Die einteilige Herstellung der Klappenvorrichtung ist zudem kostengünstiger realisierbar als der aufwändige Zusammenbau mehrerer Einzelteile und ermöglicht ein geringeres Gesamtgewicht der Klappenvorrichtung.

Ein bevorzugtes Material für den Hebel und den Ventilkörper ist eine korrosionsbeständige Nickelbasislegierung (Inconel).

Der Hebel und der Ventilkörper können aber auch aus einem austenitischen rostfreien Stahl gebildet sein, insbesondere HK 30.

Die Erfindung schafft auch ein Wastegateventil für einen Turbolader, insbesondere für einen Twin-Scroll-Lader, mit einer erfindungsgemäßen Klappenvorrichtung.

Ebenso schafft die Erfindung einen Turbolader, insbesondere einen Twin-Scroll-Lader, mit einem erfindungsgemäßen Wastegateventil.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine schematische Draufsicht auf eine Klappenvorrichtung für ein Wastegateventil nach dem Stand der Technik;
- Figur 2 eine Schnittansicht der Klappenvorrichtung aus Figur 1 entlang der Schnittlinie A-A;
- Figur 3 eine schematische Draufsicht auf eine erfindungsgemäße Klappenvorrichtung für ein Wastegateventil; und
- Figur 4 eine Schnittansicht der Klappenvorrichtung aus Figur 3 entlang der Schnittlinie B-B.

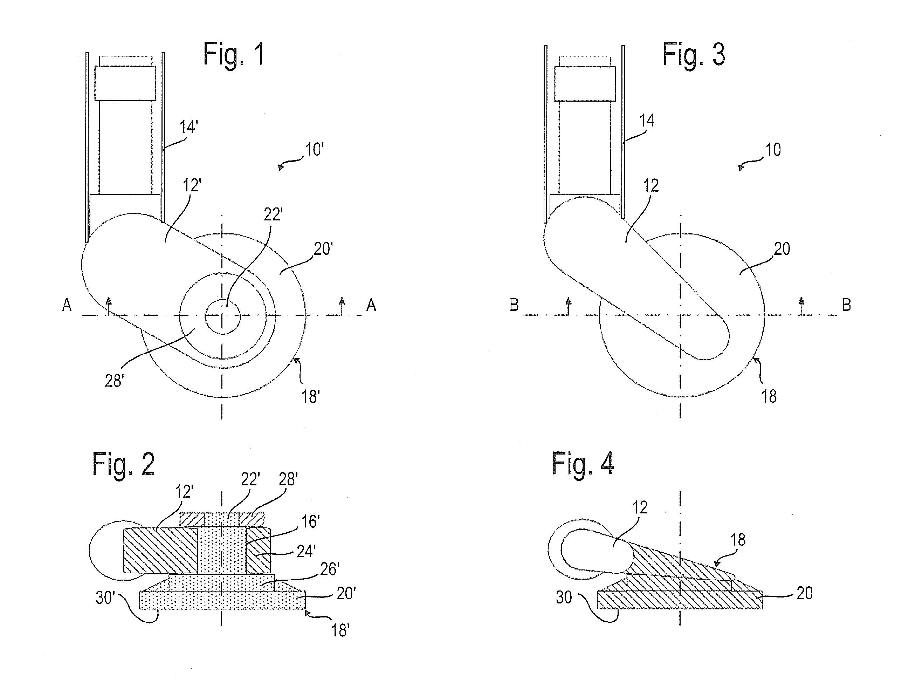

In den Figuren 1 und 2 ist beispielhaft eine mehrteilige Klappenvorrichtung 10' für ein Wastegateventil nach dem Stand der Technik dargestellt. Die Klappenvorrichtung 10' umfasst einen Hebel 12', der an eine mechanische Steuereinrichtung in Form eines hier nicht näher dargestellten Gestänges gekoppelt ist. Das Gestänge ist wiederum mit einem Geber auf der Verdichterseite des zugehörigen Turboladers verbunden.

Der Hebel 12' ist in einer Buchse 14' gelagert, wobei ein radiales Spiel der Lagerung eine begrenzte Beweglichkeit des Hebels 12' in der Buchse 14' gewährleistet.

An seinem freien Ende weist der Hebel 12'eine Bohrung 16' auf, in der ein Ventilkörper 18' ebenfalls mit einem radialen Spiel gelagert ist. Somit ist auch der Ventilkörper 18' in der Bohrung 16' in begrenztem Maße beweglich.

Der Ventilkörper 18' unterteilt sich in mehrere axiale Abschnitte mit unterschiedlichen Durchmessern. Auf der einen Seite der Bohrung 16' schließt der Ventilkörper 18' mit einem breiten Klappenabschnitt 20' ab, auf der anderen Seite mit einem im Vergleich zur Bohrung 16' schmäleren Endabschnitt 22'. Der Klappenabschnitt 20' und der Endabschnitt 22' sind durch einen in der Bohrung 16' befindlichen Mittelabschnitt 24' und einen zwischen dem Hebel 12' und dem Klappenabschnitt 20' angeordneten Lagerabschnitt 26' miteinander verbunden.

Der Endabschnitt 22' ist in der Öffnung einer Ringscheibe 28' aufgenommen und mit dieser fest verbunden, beispielsweise durch Elektronenstrahlschweißen. Da der Lagerabschnitt 26' und die Ringscheibe 28' einen größeren Durchmesser als die Bohrung 16' des Hebels 12' haben, ist der Ventilkörper 18' lose, aber unverlierbar am Hebel 12' gelagert.

Im Betrieb des Turboladers kann die Klappenvorrichtung 10' durch den Geber und das Gestänge 14' von einer geschlossenen Stellung in eine offene Stellung und umgekehrt überführt werden. In der offenen Stellung deckt die auf der freien Stirnseite des Klappenabschnitts 20' gebildete Dichtfläche 30' eine gegenüberliegende Bypassöffnung des Turbinengehäuses des Turboladers ab. Dabei sollen insbesondere das Spiel zwischen dem Hebel 12' und der Buchse 14' und das Spiel zwischen dem Ventilkörper 18' und dem Rand der Bohrung 16' für eine optimale Ausrichtung der Dichtfläche 30' bezüglich der Bypassöffnung sorgen. In der offenen Stellung gibt die Klappenvorrichtung 10' die Bypassöffnung frei.

In den Figuren 3 und 4 ist eine erfindungsgemäße Klappenvorrichtung 10 gezeigt. Diejenigen Teile, die denen der zuvor beschriebenen Klappenvorrichtung 10' entsprechen, sind mit den gleichen Bezugszeichen, jedoch ohne den Zusatz versehen, und es wird insoweit auf die obigen Erläuterungen verwiesen.

Im Unterschied zur Klappenvorrichtung 10' nach dem Stand der Technik ist die erfindungsgemäße Klappenvorrichtung 10 einteilig ausgebildet. "Einteilig" ist hier im Sinne von einstückig zu verstehen, d. h. aus demselben Werkstück gefertigt, ohne dass nachträglich Teile zusammengesetzt wurden.

Wie insbesondere in der Schnittansicht der Figur 4 zu erkennen ist, bilden der Hebel 12 und der Ventilkörper 18 mit dem Klappenabschnitt 20 eine Einheit. Eine bewegliche Lagerung des Ventilkörpers 18 mittels einer Bohrung im Hebel 12 oder einer zusätzlichen Ringscheibe ist nicht vorgesehen. Jedoch ist eine gewisse Beweglichkeit der einteiligen Klappenvorrichtung 10 durch die mit Spiel versehene Lagerung des Hebels 12 in der Buchse 14 möglich.

Als Material für den Verbund aus Hebel 12 und Ventilkörper 18 eignen sich korrosionsbeständige Nickelbasislegierungen oder austenitischer rostfreier Stahl.

Die Funktionsweise der erfindungsgemäßen Klappenvorrichtung 10 ist die gleiche wie die der Klappenvorrichtung 10' nach dem Stand der Technik mit den Ausnahmen, dass sich der Ventilkörper 18 nicht selbsttätig relativ zum Hebel 12 ausrichten kann und dass die Beweglichkeit des Hebels 12 in der Buchse 14 aufgrund der einteiligen Ausführung der Klappenvorrichtung 10 etwas eingeschränkt ist.

Beim Abdichten der Bypassöffnung des Turbinengehäuses in der geschlossenen Stellung der Klappenvorrichtung 10 wird eine Ausrichtung des Ventilkörpers 18 zur Bypassöffnung in beschränktem Maße durch das Spiel zwischen dem Hebel 12 und der Buchse 14 ermöglicht.

Die in den Figuren 3 und 4 gezeigte Klappenvorrichtung eignet sich besonders für Twin-Scroll-Turbolader, die sich von anderen Ladern durch die abweichende Gestaltung des Auspuffkrümmers und die zweigeteilte Abgaseinströmöffnung des Turbinengehäuses unterscheiden.

### Bezugszeichenliste

- 10, 10': Klappenvorrichtung
- 12, 12': Hebel
- 14, 14': Buchse
- 16': Bohrung
- 18, 18': Ventilkörper
- 20, 20': Klappenabschnitt
- 22': Endabschnitt
- 24': Mittelabschnitt
- 26': Lagerabschnitt
- 28': Ringscheibe
- 30, 30': Dichtfläche

## Patentansprüche

1. Klappenvorrichtung (10) für ein Turbolader-Wastegateventil, mit
einem Hebel (12), der zur Verbindung mit einer mechanischen Steuereinrichtung vorgesehen ist, und
einem Ventilkörper (18) mit einem Klappenabschnitt (20), der zum Abdecken einer Bypassöffnung vorgesehen ist,
**dadurch gekennzeichnet, dass** wenigstens der Hebel (12) und der Ventilkörper (18) einteilig ausgebildet sind.

2. Klappenvorrichtung (10) nach , **dadurch gekennzeichnet, dass** der Hebel (12) und der Ventilkörper (18) aus einer korrosionsbeständigen Nickelbasislegierung bestehen.

3. Klappenvorrichtung (10) nach , **dadurch gekennzeichnet, dass** der Hebel (12) und der Ventilkörper (18) aus einem austenitischen rostfreien Stahl bestehen.

4. Wastegateventil für einen Turbolader, insbesondere für einen Twin-Scroll-Lader, **gekennzeichnet durch** eine Klappenvorrichtung (10) nach einem der vorhergehenden Ansprüche.

5. Turbolader, insbesondere Twin-Scroll-Lader, **gekennzeichnet durch** ein Wastegateventil nach Anspruch 4.
